# EUROPEAN PATENT SPECIFICATION

(11) **EP 1 158 026 B1**
(45) Date of publication and mention of the grant of the patent: **27.08.2003**
(21) Application number: 01111290.1
(22) Date of filing: 16.05.2001
(51) Int. Cl.: C08L 101/10, C08L 43/04, C08K 3/34

(54) **Curable composition**
Härtbare Zusammensetzung
Composition durcissable

(30) Priority: 22.05.2000 JP 2000150161
(43) Date of publication of application: 28.11.2001
(73) Proprietor: Bridgestone Corporation, Tokyo (JP)
(72) Inventor: Yako, Takayuki, Kodairashi, Tokyo (JP)
(74) Representative: Albrecht, Thomas, Dr.

(56) References cited:
- EP-A- 0 370 463
- PATENT ABSTRACTS OF JAPAN vol. 1997, no. 01, 31 January 1997 (1997-01-31) & JP 08 231758 A (KANEGAFUCHI CHEM IND CO LTD), 10 September 1996 (1996-09-10)
- PATENT ABSTRACTS OF JAPAN vol. 1999, no. 03, 31 March 1999 (1999-03-31) & JP 10 324793 A (ASAHI GLASS CO LTD), 8 December 1998 (1998-12-08)

## Description

### Background of the Invention and Related Art Statement

The present invention relates to a curable composition which is good for a sealing material and a sealant for the use of buildings, automobiles, ships, and so on. More particularly, the present invention relates to a curable composition which has excellent durability, heat-resistance, and storage stability.

It is required for a sealing material and a sealant to have adhesive properties and elasticity to keep close adhesion with a member under movements and vibrations of the member. Various curable compositions have been developed to meet these requirements.

Conventional sealing materials tend to be deteriorated by movements or vibrations of members, changes of ambient temperature, or the like. Moreover, modulus of elasticity of a conventional sealing material becomes high in a condition of high temperature so that the sealing material could be destructed or ripped off a member with movements and vibrations of the member.

### Object and Summary of the Invention

It is an object of the present invention to provide a curable composition which is excellent in such properties as adhesive properties and strength. It is another object of the present invention to provide a curable composition having excellent long-term durability. Further, it is an object of the present invention to provide a curable composition which has few stringiness and improved workability.

A curable composition of the present invention comprises 100 parts by weight of a saturated hydrocarbon polymer having at least one silicon-containing group which has at least one hydroxyl or hydrolyzable group bonded to a silicon atom and is crosslinkable through formation of a siloxane bond, 1-100 parts by weight of a compound having at least one epoxy group at its end, and 1-100 parts by weight of mica.

### Detailed Description of the Preferred Embodiments

A curable composition of the present invention includes the aforementioned saturated hydrocarbon polymer, the compound having at least one epoxy group at its end, and the mica. The saturated hydrocarbon polymer has at least one silicon-containing group which has at least one hydroxyl or hydrolyzable group bonded to a silicon atom and is crosslinkable through the formation of a siloxane bond. By a method disclosed in Japanese Patent Publication H8-231758A, this saturated hydrocarbon polymer is prepared from an isobutylene polymer having functional groups at all their ends and including an alkoxysilyl group as shown in the following chemical formula.

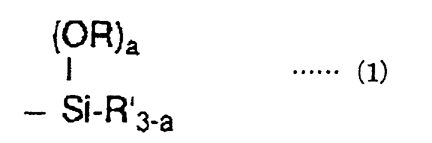

In the above chemical formula, each of R and R' is lower alkyl containing 1-5 carbon atoms, R may be the same with R', or may be different from R', and "a" is an integer from 1to 3. The molecular weight of this isobutylene polymer having functional groups at all its ends is 1,000-40,000. This polymer is wax-like or very sticky liquid at room temperature, and is prepared by a cationic polymerization method called Inifers method.

As examples of the saturated hydrocarbon polymer, which is suitably used in the present invention, having at least one silicon-containing group which has at least one hydroxyl or hydrolyzable group bonded to a silicon atom and is crosslinkable through the formation of a siloxane bond, polymers in "Epion" series manufactured by Kanegafuchi Chemical Industries Co., Ltd. are given and they have a chemical structure shown in the following chemical formula.

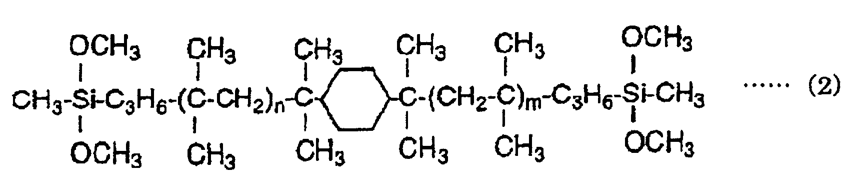

wherein n is an integer from 5 to 400 and m is an integer from 5 to 400.

As for the compound having at least one epoxy group at its end, it is desirable that the main chain of the compound is an alkyl group and the compound has good compatibility with the aforementioned saturated hydrocarbon polymer. An example of that compound is expressed by the following chemical formula, which is transparent liquid at room temperature.

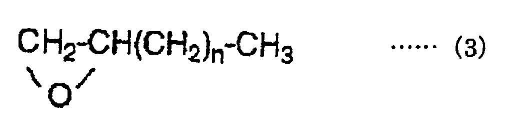

wherein n is an integer from 1 to 1,000, preferably from 5 to 1,000. When n is greater than 1,000, viscosity of the curable composition becomes too high and a number of epoxy groups becomes relatively low.

The amount of the compound having at least one epoxy group at its end is 1-100 parts by weight, preferably 5-40 parts by weight for 100 parts by weight of the aforementioned saturated hydrocarbon polymer. When the amount of the compound is less than 1 part by weight, heat resistance of the cured material becomes poor. When the amount of the compound is more than 100 parts by weight, the curing may have some problems.

The amount of mica is 1-100 parts by weight, preferably 1-30 parts by weight for 100 parts by weight of the aforementioned saturated hydrocarbon polymer. There is no restriction on the kind of mica. Both natural and synthetic mica can be used. The average particle size of mica is preferably not greater than 150µm, most preferably in a range from 20 µm to 50µm.

In addition, it is preferable to mix a plasticizer into the curable composition of the present invention.

The plasticizer is not limitative and any usual plasticizer can be used. However, it is recommended to use a plasticizer having good compatibility with ingredients of the curable composition.

The plasticizer used for the curable composition is preferably at least one compound selected from a group consisting of hydrocarbon compounds, paraffin chlorides, phthalates, non-aromatic dibasic acid esters, esters of polyalkylene glycols, phosphate esters, and the like.

Examples of the hydrocarbon compound are polybutene, hydrogenated polybutene, ethylene- α-olefin oligomer, α-methylstyrene oligomer, biphenyl, terphenyl, triaryl dimethane, alkylene triphenyl, liquid polybutadiene, hydrogenated liquid polybutadiene, alkyl diphenyl, partially hydrogenated terphenyl, paraffinic oils, naphthenic oils, atactic polypropylene, and the like.

Examples of phthalates are dibutyl phthalate, diheptyl phthalate, di(2-ethylhexyl) phthalate, butylbenzyl phthalate, butylphthalylbutyl glycolate, and the like.

Examples of non-aromatic dibasic acid esters are dioctyl adipate, dioctyl sebacate, and the like.

Examples of esters of polyalkylene glycols are diethylene glycol benzoate, triethylene glycol dibenzoate, and the like.

Examples of phosphate esters are tricresyl phosphate, tributyl phosphate, and the like.

Among these plasticizers, most preferable plasticizers are hydrocarbon compounds not having unsaturated groups, for example, hydrogenated polybutene, hydrogenated liquid polybutadiene, paraffinic oils, naphthenic oils, atactic polypropylene, etc., which have good compatibility with the ingredients of the curable composition and make improvements in weather resistance of the curable composition.

The amount of the plasticizer is preferably in a range from 10 to 200 parts by weight for 100 parts by weight of the aforementioned saturated hydrocarbon polymer.

The curable composition of the present invention may contain proper amounts of other additives which are usually added into a sealing material and a sealant, for example, fillers (heavy calcium carbonate, calcium carbonate treated with a fatty acid, humed silica, precipitated silica, carbon black, talc, titanium oxide, and the like), adhesion improvers (epoxy compounds, silane coupling agent, and the like), anti-aging agents (hindered phenols, mercaptanes, thiophosphates, thioaldehydes, and the like), moisture suppliers (water, hydrates of inorganic salts, and the like), ultraviolet light absorbers (hindered amines, benzotriazoles, and the like), antiozonants, light stabilizers, toners, and so on.

A curing agent including curing catalysts is mixed with the curable composition prior to the use of the curable composition. The curing agent preferably includes curing catalysts (tin catalysts such as tin dioctylate, dibutyltin dilaurate, dibutyltin bis-acetyl acetate, and the like), cocatalysts (tertiary amine compounds, and the like), plasticizers, fillers. The amount of the curing agent is preferably in a range from 5 to 20 parts by weight (0.3 to 5.0 parts by weight of the curing catalyst) for 100 parts by weight of the aforementioned saturated hydrocarbon polymer.

### Example 1

As the saturated hydrocarbon polymer having at least one silicon-containing group which has at least one hydroxyl or hydrolyzable group bonded to a silicon atom and is crosslinkable through the formation of a siloxane bond, "Epion EP505S" (manufactured by Kanegafuchi Chemical Industries Co., Ltd.) was used. A base material was prepared by mixing 100 parts by weight of the saturated hydrocarbon polymer with 67 parts by weight of colloidal calcium carbonate and 27 parts by weight of ground whiting as fillers, 37 parts by weight of paraffin hydrocarbon (PAO 5004) as the plasticizer, 2 parts by weight of an anti-aging agent, 3.3 parts by weight of titanium oxide, 3.3 parts by weight of water as the co-curing agent, and 5 parts by weight of mica.

To the base material, 6.7 parts by weight of the epoxy compound (Rikaresin EX-24 manufactured by Shin-Nihon Rika Co., Ltd. : this compound is expressed by the aforementioned chemical formula 3, wherein n is 12-14.) was added to prepare the curable composition.

The curable composition was cured by adding the curing agent consisting of 1.7 parts by weight of tin octylate and 0.5 parts by weight of lauryl amine. Properties of the cured material were measured according to JIS (The Japanese Industrial Standard) A5758 and the results are shown in Table 1. The viscosity and workability were measured right after adding the curing agent. Further, the loss of volume after heating, durability, and stringiness of the cured material were measured. Those results are also shown in Table 1.

### Example 2, Comparative Examples 1-5

Curable compositions were prepared in the same manner as Example 1 except that amounts of ingredients are shown in Table 1. These curable compositions were cured by curing agents shown in Table 1. Properties of cured materials were measured, the results of which are shown in Table 1.

In only the case of Comparative Example 3, the curable composition contained 10 parts by weight of low molecular weight hydrocarbon (IP1620 manufactured by Idemitsu Petrochemical Co., Ltd.).

Comparative Examples 4 and 5 were the same in their composition as Examples 1 and 2, respectively, except that mica was not added.

**Table 1**

| Component | | Examples | | Comparative Examples | | | | |
|---|---|---|---|---|---|---|---|---|
| | | 1 | 2 | 1 | 2 | 3 | 4 | 5 |
| Saturated hydrocarbon polymer *1 | | 100 | 100 | 100 | 100 | 100 | 100 | 100 |
| Filler | | 100 | 100 | 100 | 100 | 100 | 100 | 100 |
| Plasticizer | | 37 | 37 | 43 | 43 | - | 37 | 37 |
| Anti-aging agent | | 2 | 2 | 2 | 2 | 2 | 2 | 2 |
| Water | | 3.3 | 3.3 | 3.3 | 3.3 | 3.3 | 3.3 | 3.3 |
| Titanium oxide | | 4.7 | 4.7 | 4.7 | 4.7 | 4.7 | 4.7 | 4.7 |
| Epoxy compound *2 | | 6.7 | 6.7 | - | - | - | 6.7 | 6.7 |
| Low molecular weight hydrocarbon *3 | | - | - | - | - | 10 | - | - |
| Mica | | 5 | 5 | 5 | 5 | 5 | - | - |
| Curing agent | Tin octylate | 1.7 | 3.3 | 1.7 | 3.3 | 3.3 | 1.7 | 3.3 |
| | Lauryl amine | 0.5 | 0.5 | 0.5 | 0.5 | 0.5 | 0.5 | 0.5 |
| Viscosity(23°C) Strain 100%[P] | | 210 | 200 | 320 | 300 | 170 | 210 | 200 |
| Workability | | Good | Good | Poor | Poor | Fair | Good to Fair | Good to Fair |
| Ordinary state 50%modulus[N/cm2] | | 11 | 11 | 11 | 12 | 11 | 11 | 11 |
| Heat resistance (90°C, 2 weeks) 50%modulus[N/cm2] | | 14 | 15 | 17.5 | 19 | 20 | 14 | 15 |
| Loss of volume after heat resistance test | | 10% or less | 10% or less | 10% or less | 10% or less | 10% or more | 10% or less | 10% or less |
| Durability 10030 | | Good | Good | Fair to Poor | Fair to Poor | Fair | Good | Good |
| Stringiness | | Good | Good | Good | Good | Good | Fair to poor | Fair to poor |

| | | | | | | | | |
|---|---|---|---|---|---|---|---|---|
| *1 Epion EP505S (Kanegafuchi Chemical Industries Co., Ltd) | | | | | | | | |
| *2 Rikaresin 24EX (Shin-Nihon Rika Co., Ltd.) | | | | | | | | |
| *3 IP1620 (Idemitsu Petrochemical Co., Ltd.) | | | | | | | | |

From the comparisons of Examples 1 and 2 with Comparative Examples 4 and 5, respectively, it has been found that the addition of mica decreases stringiness resulting in improvements of workability.

It has been found that low molecular weight hydrocarbon added in Comparative Example 3 is effective to decrease viscosity of the curable composition. However, once the cured material is exposed to surroundings of high temperature, the hydrocarbon evaporates, which leads to decreasing of modulus of elasticity and greater loss of volume. It has also been found that Rikaresin EX24 is very effective to decrease viscosity of the curable composition and that, after heating, the cured material containing Rikaresin EX24 has a small loss of volume, a small increase of modulus of elasticity and improved durability.

As resulted from Examples and Comparative Examples, the present invention provides a curable composition comprising liquid saturated hydrocarbon polymer having a reactive silicon-containing group, wherein the curable composition provides a cured material having only a small increase of modulus of elasticity at high temperature and excellent durability.

## Claims

1. A curable composition comprising:
100 parts by weight of saturated hydrocarbon polymer having at least one silicon-containing group which has at least one hydroxyl or hydrolyzable group bonded to a silicon atom and is crosslinkable through formation of a siloxane bond,
1-100 parts by weight of a compound which has at least one epoxy group at its end, and
1-100 parts by weight of mica.

2. A curable composition as claimed in claim 1, wherein the main chain of said compound having at least one epoxy group at its end is a saturated hydrocarbon containing 1-1,000 carbon atoms.

3. A curable composition as claimed in claim 2, wherein the main chain of said compound having at least one epoxy group contains 1-100 carbon atoms.

4. A curable composition as claimed in any one of claims 1 through 3, wherein the amount of said compound having at least one epoxy group is 5-40 parts by weight.

5. A curable composition as claimed in any one of claims 1 through 4, wherein the amount of said mica is 1-30 parts by weight.

6. A curable composition as claimed in any one of claims 1 through 5, further comprising 0.5-5 parts by weight of an anti-aging agent.

7. A curable composition as claimed in any one of claims 1 through 6, further comprising 10-500 parts by weight of fillers.

8. A curable composition as claimed in any one of claims 1 through 7, further comprising at least one selected from a group consisting of an adhesion improver, a moisture supplier, an ultraviolet light absorber, an antiozonant, a light stabilizer, and a toner.

9. Use of the curable composition claimed in any one of claims 1 through 8, wherein a curing agent is mixed into the curable composition prior to the use of the curable composition.

10. Use of a curable composition as claimed in claim 9, wherein said curing agent includes a curing catalyst.

11. Use of a curable composition as claimed in claim 10, wherein said curing catalyst includes a tin compound.

12. Use of a curable composition as claimed in claim 11, wherein said curing catalyst is at least one selected from a group consisting of tin dioctylate, dibutyltin dilaurate, and dibutyltin bis-acetyl acetate.

## Patentansprüche

1. Härtbare Masse, umfassend:
100 Gewichtsteile eines gesättigten Kohlenwasserstoffpolymeren mit mindestens einer Silicium enthaltenden Gruppe, die mindestens eine Hydroxylgruppe oder eine hydrolysierbare Gruppe, gebunden an ein Siliciumatom, hat und durch Bildung einer Siloxanbindung vernetzbar ist,
1-100 Gewichtsteile einer Verbindung, die mindestens eine Epoxygruppe an ihrem Ende hat, und
1-100 Gewichtsteile Glimmer.

2. Härtbare Masse nach Anspruch 1, **dadurch gekennzeichnet, dass** die Hauptkette der genannten Verbindung, die mindestens eine Epoxygruppe an ihrem Ende hat, eine gesättigte Kohlenwasserstoffgruppe, enthaltend 1-1.000 Kohlenstoffatome, ist.

3. Härtbare Masse nach Anspruch 2, **dadurch gekennzeichnet, dass** die Hauptkette der genannten Verbindung, die mindestens eine Epoxygruppe an ihrem Ende hat, 1-100 Kohlenstoffatome enthält.

4. Härtbare Masse nach einem der Ansprüche 1 bis 3, **dadurch gekennzeichnet, dass** die Menge der genannten Verbindung, die mindestens eine Epoxygruppe hat, 5-40 Gewichtsteile ist.

5. Härtbare Masse nach einem der Ansprüche 1 bis 4, **dadurch gekennzeichnet, dass** die Menge des genannten Glimmers 1-30 Gewichtsteile ist.

6. Härtbare Masse nach einem der Ansprüche 1 bis 5, **dadurch gekennzeichnet, dass** sie weiterhin 0,5-5 Gewichtsteile eines Antialterungsmittels enthält.

7. Härtbare Masse nach einem der Ansprüche 1 bis 6, **dadurch gekennzeichnet, dass** sie weiterhin 10-500 Gewichtsteile Füllstoffe enthält.

8. Härtbare Masse nach einem der Ansprüche 1 bis 7, **dadurch gekennzeichnet, dass** sie weiterhin mindestens ein Material aus der Gruppe bestehend aus einem Mittel zur Verbesserung der Adhäsion, einem Zuführungsmittel für Feuchtigkeit, einem Ultraviolettlichtabsorber, einem Antiozonmittel, einem Lichtstabilisator und einem Toner enthält.

9. Verwendung der härtbaren Masse nach einem der Ansprüche 1 bis 8, **dadurch gekennzeichnet, dass** ein Härtungsmittel in die härtbare Masse vor der Verwendung der härtbaren Masse eingemischt wird.

10. Verwendung einer härtbaren Masse nach Anspruch 9, **dadurch gekennzeichnet, dass** das genannte Härtungsmittel einen Härtungskatalysator einschließt.

11. Verwendung einer härtbaren Masse nach Anspruch 10, **dadurch gekennzeichnet, dass** der genannte Härtungskatalysator eine Zinnverbindung einschließt.

12. Verwendung einer härtbaren Masse nach Anspruch 11, **dadurch gekennzeichnet, dass** der Härtungskatalysator mindestens einer, ausgewählt aus der Gruppe bestehend aus Zinndioctylat, Dibutylzinndilaurat und Dibutylzinnbisacetylacetat, ist.

## Revendications

1. Composition durcissable comprenant :
100 parties en poids d'un polymère hydrocarboné saturé ayant au moins un groupe silicié qui comporte au moins un groupe hydroxyle ou un groupe hydrolysable relié à un atome de silicium et que l'on peut faire réticuler par formation d'une liaison siloxane,
1 à 100 parties en poids d'un composé qui comporte au moins un groupe époxy à son extrémité, et
1 à 100 parties en poids de mica.

2. Composition durcissable selon la revendication 1, dans laquelle la chaîne principale dudit composé comportant au moins un groupe époxy à son extrémité est un hydrocarbone saturé comportant 1 à 1000 atomes de carbone.

3. Composition durcissable selon la revendication 2, dans laquelle la chaîne principale dudit composé comportant au moins un groupe époxy comporte 1 à 100 atomes de carbone.

4. Composition durcissable selon l'une quelconque des revendications 1 à 3, dans laquelle la quantité dudit composé comportant au moins un groupe époxy est comprise entre 5 et 40 parties en poids.

5. Composition durcissable selon l'une quelconque des revendications 1 à 4, dans laquelle la quantité dudit mica est comprise entre 1 et 30 parties en poids.

6. Composition durcissable selon l'une quelconque des revendications 1 à 5, comprenant en outre 0,5 à 5 parties en poids d'un agent anti-vieillissement.

7. Composition durcissable selon l'une quelconque des revendications 1 à 6, comprenant en outre 10 à 500 parties en poids de charges.

8. Composition durcissable selon l'une quelconque des revendications 1 à 7, comprenant en outre au moins un composé choisi dans l'ensemble constitué par un agent améliorant l'adhérence, un agent fournissant de l'humidité, un agent absorbant la lumière ultraviolette, un agent anti-ozone, un agent de stabilisation vis-à-vis de la lumière ou un toner.

9. Utilisation d'une composition durcissable selon l'une quelconque des revendications 1 à 8, dans laquelle on mélange un agent de durcissement dans la composition durcissable avant d'utiliser la composition durcissable.

10. Utilisation d'une composition durcissable selon la revendication 9, dans laquelle ledit agent de durcissement comprend un catalyseur de durcissement.

11. Utilisation d'une composition durcissable selon la revendication 10, dans laquelle ledit catalyseur de durcissement comprend un composé de l'étain.

12. Utilisation d'une composition durcissable selon la revendication 11, dans laquelle ledit catalyseur de durcissement est au moins un composé choisi dans l'ensemble constitué par le dioctylate d'étain, le dilaurate de dibutylétain, et le bi-acétylacétate de dibutylétain.
